# FASCICULE DE BREVET EUROPEEN

(11) **EP 2 200 845 B1**
(45) Date de publication et mention de la délivrance du brevet: **14.11.2012**
(21) Numéro de dépôt: 08787581.1
(22) Date de dépôt: 01.09.2008
(51) Int. Cl.: B60C 9/20

(54) **PNEUMATIQUE POUR VEHICULES LOURDS**
REIFEN FÜR SCHWER-NUTZFAHRZEUG
HEAVY GOODS VEHICLE TYRE

(30) Priorité: 13.09.2007 FR 0706493
(43) Date de publication de la demande: 30.06.2010
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: JOHNSON, Philippe, F-63800 Perignat sur Allier (FR); DOMINGO, Alain, F-63190 Orléat (FR)
(74) Mandataire: Le Cam, Stéphane Georges Elie
(86) Numéro de dépôt international: PCT/EP2008/061500
(87) Numéro de publication internationale: WO 2009/033976

(56) Documents cités:
- WO-A-00/69659
- FR-A- 2 770 458

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

L'armature de renforcement ou renforcement des pneumatiques et notamment des pneumatiques de véhicules de type poids-lourds est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisé pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base tels les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc., sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage» pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieure à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités. Le même problème existe dans le cas de bords de deux couches d'éléments de renforcement, ladite autre couche n'étant pas obligatoirement radialement adjacente à la première.

Afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérésis, d'un profilé de caoutchouc couvrant au moins les côtés et les bords marginaux de l'armature de sommet et constitué d'un mélange caoutchouteux à faible hystérésis.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

La demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

Les roulages prolongés dans des conditions particulièrement sévères des pneumatiques ainsi construits ont fait apparaître des limites en termes d'endurance de ces pneumatiques.

Pour remédier à de tels inconvénients et améliorer l'endurance de l'armature de sommet de ces pneumatiques, il a été proposé d'associer aux couches de sommet de travail à angle au moins une couche additionnelle d'éléments de renforcement sensiblement parallèles à la direction circonférentielle. La demande de brevet WO 99/24269 propose notamment, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

Les résultats obtenus en termes d'endurance et d'usure lors de roulages prolongés sur routes à grande vitesse sont satisfaisants. Toutefois, il ressort des essais effectués que l'ensemble des pneumatiques équipant un véhicule, présente des performances en termes d'endurance dispersées ; en d'autres termes si les performances sont effectivement meilleures qu'avec les solutions précédentes, il apparaît que les résultats obtenus ne sont pas toujours homogènes en termes de valeur, la dispersion des résultats étant relativement importantes. Ceci reste vrai pour différents pneumatiques testés successivement sur un même véhicule et mis en place au même endroit sur ce véhicule.
Un pneumatique ayant les caractéristiques techniques du préambule de la revendication 1 est connu de WO-A- 00 69 659.

Un but de l'invention est de fournir des pneumatiques pour véhicules "Poids-Lourds", dont les performances d'endurance et d'usure sont conservées pour des usages routiers et dont les performances notamment d'endurance sont reproductibles de manière plus homogènes sur tous les pneumatiques.

Ce but est atteint selon l'invention par un pneumatique à armature de carcasse radiale comprenant une armature de sommet formée d'au moins deux couches de sommet de travail d'éléments de renforcement inextensibles, croisés d'une couche à l'autre en faisant avec la direction circonférentielle des angles compris entre 10° et 45°, elle-même coiffée radialement d'une bande de roulement, ladite bande de roulement étant réunie à deux bourrelets par l'intermédiaire de deux flancs, l'armature de sommet comportant au moins une couche d'éléments de renforcement circonférentiels radialement disposée entre deux couches de sommet de travail, les couches de sommet de travail adjacentes à la couche d'éléments de renforcement circonférentiels étant de part et d'autre du plan équatorial et dans le prolongement axial de la couche d'éléments de renforcement circonférentiels couplées sur une largeur axiale 1, pour être ensuite découplées par des profilés de mélange de caoutchouc au moins sur le restant de la largeur commune aux dites deux couches de travail, une couche de mélange polymérique d'épaisseur supérieure à 1.5 mm sur une largeur axiale supérieure à 0.1xd étant positionnée axialement entre l'extrémité axialement extérieure de la couche d'éléments de renforcement circonférentiels et l'extrémité axialement intérieure de la zone de couplage des couches de sommet de travail adjacentes de part et d'autre à la couche d'éléments de renforcement circonférentiels.

L'épaisseur de la couche de mélange polymérique est mesurée selon une direction radiale.

Les largeurs axiales des couches d'éléments de renforcement et des couches de mélange polymérique sont mesurées sur une coupe transversale d'un pneumatique, le pneumatique étant donc dans un état non gonflé.

La distance d est la distance axiale séparant l'extrémité de la couche d'éléments de renforcement circonférentiels et l'extrémité de la couche de sommet de travail adjacente à la couche d'éléments de renforcement circonférentiels la plus étroite.

Au sens de l'invention, des couches de sommet de travail sont dites couplées si les éléments de renforcement respectifs de chacune des couches sont séparés radialement d'au plus 1,5 mm, ladite épaisseur de caoutchouc étant mesurée radialement entre les génératrices respectivement supérieure et inférieure desdits éléments de renforcement.

La présence d'un couplage entre les couches de sommet de travail adjacentes à la couche d'éléments de renforcement circonférentiels permet la diminution des contraintes de tension agissant sur les éléments circonférentiels axialement le plus à l'extérieur et situé le plus près du couplage.

L'épaisseur des profilés de découplage entre les couches de sommet de travail, axialement extérieurs à la zone de couplage, mesurée au droit des extrémités de la nappe de travail la moins large, sera au moins égale à deux millimètres, et préférentiellement supérieure à 2,5 mm.

Durant leurs études, les inventeurs ont su mettre en évidence que les techniques de fabrication des pneumatiques conduisaient à de légères variations du positionnement de la zone de couplage des couches de sommet de travail qui entraînent des courbures locales des éléments de renforcements des couches de sommet de travail qui peuvent varier. La présence d'une couche de mélange polymérique d'épaisseur supérieur à 1.5 mm sur une largeur axiale supérieure à 0.1xd en extrémité de la couche d'éléments de renforcement circonférentiels permet de conserver une distance minimum entre la zone de couplage des couches de sommet de travail et l'extrémité de la couche d'éléments de renforcement circonférentiels. Cette distance minimum permet d'éliminer les risques de voir apparaître des rayons de courbures des éléments de renforcement des couches de sommet de travail trop faibles qui semblent pouvoir être à l'origine de moins bonnes performances des pneumatiques en roulage en termes d'endurance.

Selon un mode de réalisation préféré de l'invention, la couche de mélange polymérique positionnée axialement entre l'extrémité axialement extérieure de la couche d'éléments de renforcement circonférentiels et l'extrémité axialement intérieure de la zone de couplage des couches de sommet de travail adjacentes à la couche d'éléments de renforcement circonférentiels présente une largeur axiale inférieure à 0.5xd.

Ce mode de réalisation préféré de l'invention permet notamment de limiter les risques d'apparition d'une poche d'air entre l'extrémité de la couche de renforcement circonférentiels et la zone de couplage des couches de sommet de travail. Un tel mode de réalisation conduit notamment à une amélioration des rendements de fabrication, la présence d'air pouvant conduire jusqu'à une mise au rebus d'un pneumatique.

Une variante avantageuse de l'invention prévoit que la plasticité Mooney de la couche de mélange non réticulé est supérieure à la plasticité Mooney du mélange de calandrage non réticulé des couches de sommet de travail adjacentes à la couche d'éléments de renforcement circonférentiels.

Le calandrage des couches de sommet correspond à la masse caoutchouteuse qui entoure les éléments de renforcement pour former ladite couche.

Concernant la plasticité Mooney, on utilise un consistomètre oscillant tel que décrit dans la norme française NF T 43-005 (Novembre 1980). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre).

De préférence, la plasticité Mooney de la couche de mélange non réticulé est supérieure à 90 UM et de préférence supérieur à 95 UM.

De tels choix concernant la couche de mélange polymérique qui définit la distance entre la zone de couplage des couches de sommet de travail et l'extrémité de la couche d'éléments de renforcement circonférentiels permettent à ladite couche de conserver sa géométrie pendant le processus de fabrication du pneumatique.

Selon une variante avantageuse de réalisation de l'invention, la couche d'éléments de renforcement circonférentiels présente une largeur axiale supérieure à 0.4xS.

S est la largeur maximale axiale du pneumatique, lorsque ce dernier est monté sur sa jante de service et gonflé à sa pression recommandée.

Selon une réalisation préférée de l'invention, au moins deux couches de sommet de travail présentent des largeurs axiales différentes, la différence entre la largeur axiale de la couche de sommet de travail axialement la plus large et la largeur axiale de la couche de sommet de travail axialement la moins large étant comprise entre 10 et 30 mm.

De préférence encore, la couche de sommet de travail axialement la plus large est radialement à l'intérieur des autres couches de sommet de travail.

Selon un mode de réalisation avantageux de l'invention, les éléments de renforcement d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 GPa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement.

Les modules des mêmes éléments de renforcement peuvent être mesurés sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement. La section globale de l'élément de renforcement est la section d'un élément composite constitué de métal et de caoutchouc, ce dernier ayant notamment pénétré l'élément de renforcement pendant la phase de cuisson du pneumatique.

Selon cette formulation relative à la section globale de l'élément de renforcement, les éléments de renforcement des parties axialement extérieures et de la partie centrale d'au moins une couche d'éléments de renforcement circonférentiels sont des éléments de renforcement métalliques présentant un module sécant à 0,7 % d'allongement compris entre 5 et 60 GPa et un module tangent maximum inférieur à 75 GPa.

Selon une réalisation préférée, le module sécant des éléments de renforcement à 0,7 % d'allongement est inférieur à 50 Gpa et supérieur à 10 GPa, de préférence compris entre 15 et 45 GPa et de préférence encore inférieure à 40 GPa.

De préférence également, le module tangent maximum des éléments de renforcement est inférieur à 65 GPa et de préférence encore inférieur à 60 GPa.

Selon un mode de réalisation préféré, les éléments de renforcements d'au moins une couche d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement de la nappe additionnelle sont habituellement dénommés éléments "bi-module".

Selon une réalisation préférée de l'invention, la pente sensiblement constante et forte apparaît à partir d'un allongement relatif compris entre 0,1% et 0,5%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche d'éléments de renforcement circonférentiels selon l'invention sont par exemple des assemblages de formule 21.23, dont la construction est 3x(0.26+6x0.23) 4.4/6.6 SS ; ce câble à torons est constitué de 21 fils élémentaires de formule 3 x (1+6), avec 3 torons tordus ensembles chacun constitué de 7 fils, un fil formant une âme centrale de diamètre égal à 26/100 mm et 6 fils enroulés de diamètre égal à 23/100 mm. Un tel câble présente un module sécant à 0,7% égal à 45 GPa et un module tangent maximum égal à 98 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenéé à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.23 présente un module sécant à 0,7% égal à 23 GPa et un module tangent maximum égal à 49 GPa.

De la même façon, un autre exemple d'éléments de renforcement est un assemblage de formule 21.28, dont la construction est 3x(0.32+6x0.28) 6.2/9.3 SS. Ce câble présente un module sécant à 0,7% égal à 56 GPa et un module tangent maximum égal à 102 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.28 présente un module sécant à 0,7% égal à 27 GPa et un module tangent maximum égal à 49 GPa.

L'utilisation de tels éléments de renforcement dans au moins une couche d'éléments de renforcement circonférentiels permet notamment de conserver des rigidités de la couche satisfaisante y compris après les étapes de conformation et de cuisson dans des procédés de fabrication usuels.

Les éléments métalliques sont préférentiellement des câbles d'acier.

L'invention prévoit encore avantageusement pour diminuer les contraintes de tension agissant sur les éléments circonférentiels axialement le plus à l'extérieur que l'angle formé avec la direction circonférentielle par les éléments de renforcement des couches de sommet de travail est inférieur à 30° et de préférence inférieur à 25°.

Selon une autre variante avantageuse de l'invention, les couches de sommet de travail comportent des éléments de renforcement, croisés d'une nappe à l'autre, faisant avec la direction circonférentielle des angles variables selon la direction axiale lesdits angles étant supérieurs sur les bords axialement extérieurs des couches d'éléments de renforcement par rapport aux angles desdits éléments mesurés au niveau du plan médian circonférentiel. Une telle réalisation de l'invention permet d'augmenter la rigidité circonférentielle dans certaines zones et au contraire de la diminuer dans d'autres, notamment pour diminuer les mises en compression de l'armature de carcasse.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

L'invention propose encore une étape de procédé de fabrication d'un pneumatique à armature de carcasse radiale comprenant une armature de sommet formée d'au moins deux couches de sommet de travail d'éléments de renforcement inextensibles, croisés d'une couche à l'autre en faisant avec la direction circonférentielle des angles compris entre 10° et 45°, elle-même coiffée radialement d'une bande de roulement, ladite bande de roulement étant réunie à deux bourrelets par l'intermédiaire de deux flancs, l'armature de sommet comportant au moins une couche d'éléments de renforcement circonférentiels radialement disposée entre deux couches de sommet de travail, les couches de sommet de travail adjacentes à la couche d'éléments de renforcement circonférentiels étant de part et d'autre du plan équatorial et dans le prolongement axial de la couche d'éléments de renforcement circonférentiels couplées sur une largeur axiale, pour être ensuite découplées par des profilés de mélange de caoutchouc au moins sur le restant de la largeur commune aux dites deux couches de travail, selon laquelle une couche de mélange polymérique d'épaisseur supérieure à 1.5 mm sur une largeur axiale supérieure à 0.1xd est mise en place axialement entre l'extrémité axialement extérieure de la couche d'éléments de renforcement circonférentiels et l'extrémité axialement intérieure de la zone de couplage des couches de sommet de travail adjacentes à la couche d'éléments de renforcement circonférentiels, la plasticité Mooney de la couche de mélange non réticulé étant supérieure à la plasticité Mooney du mélange de calandrage non réticulé des couches de sommet de travail adjacentes à la couche d'éléments de renforcement circonférentiels.

De préférence, la plasticité Mooney de la couche de mélange non réticulé est supérieur à 90 UM et de préférence supérieur à 95 UM.

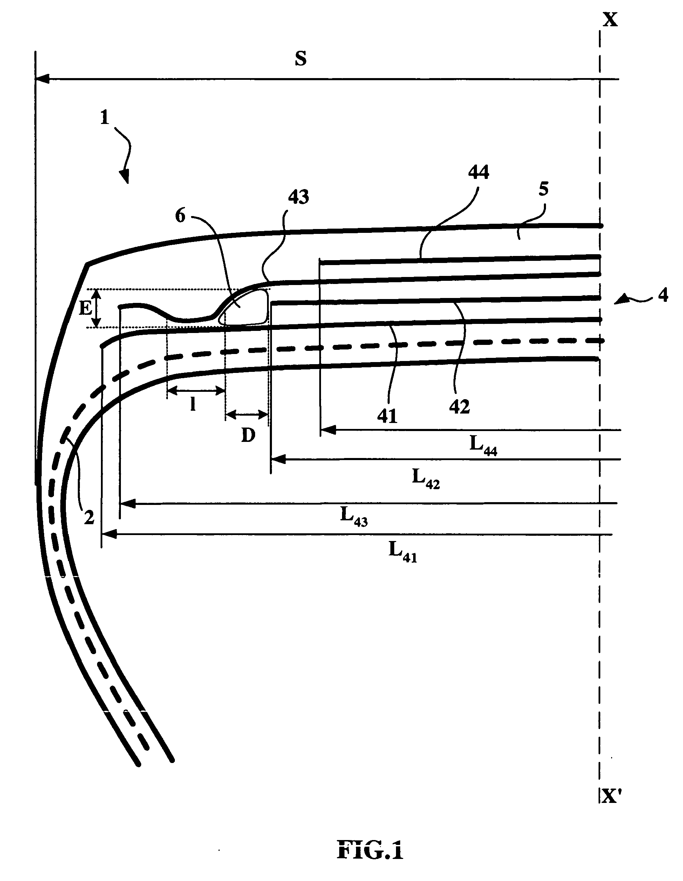

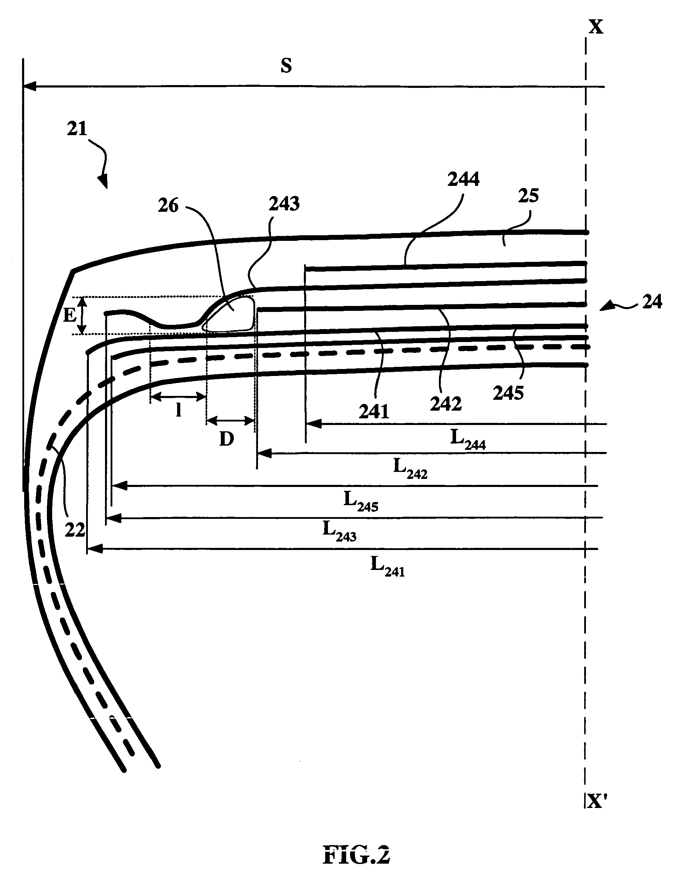

D'autres détails et caractéristiques avantageux de l'invention ressortiront ci-après de la description des exemples de réalisation de l'invention en référence aux figures 1 et 2 qui représentent :
- figure1, une vue méridienne d'un schéma d'un pneumatique selon un mode de réalisation de l'invention,
- figure 2, une vue méridienne d'un schéma d'un pneumatique selon un deuxième mode de réalisation de l'invention.

Les figures ne sont pas représentées à l'échelle pour en simplifier la compréhension. Les figures ne représentent qu'une demi-vue d'un pneumatique qui se prolonge de manière symétrique par rapport à l'axe XX' qui représente le plan médian circonférentiel, ou plan équatorial, d'un pneumatique.

Sur la figure 1, le pneumatique 1, de dimension 315/60 R 22.5, a un rapport de forme H/S égal à 0,60, H étant la hauteur du pneumatique 1 sur sa jante de montage et S sa largeur axiale maximale. Ledit pneumatique 1 comprend une armature de carcasse radiale 2 ancrée dans deux bourrelets, non représentés sur la figure. L'armature de carcasse est formée d'une seule couche de câbles métalliques. Cette armature de carcasse 2 est frettée par une armature de sommet 4, formée radialement de l'intérieur à extérieur :
- d'une première couche de travail 41 formée de câbles métalliques inextensibles 11.35 non frettés, continus sur toute la largeur de la nappe, orientés d'un angle égal à 18°,
- d'une couche d'éléments de renforcement circonférentiels 42 formée de câbles métalliques en acier 21x28, de type "bi-module",
- d'une seconde couche de travail 43 formée de câbles métalliques inextensibles 11.35 non frettés, continus sur toute la largeur de la nappe, orientés d'un angle égal à 26° et croisés aux câbles métalliques de la couche 41,
- d'une couche de protection 44 formées de câbles métalliques élastiques 18x23.

L'armature de sommet est elle-même coiffée d'une bande de roulement 5.

La largeur axiale maximale S du pneumatique est égale à 319 mm.

La largeur axiale L₄₁ de la première couche de travail 41 est égale à 260 mm.

La largeur axiale L₄₃ de la deuxième couche de travail 43 est égale à 245 mm. La différence entre les largeurs L₄₁ et L₄₃ est égale à 15 mm.

Quant à la largeur axiale globale L₄₂ de la couche d'éléments de renforcement circonférentiels 42, elle est égale à 200 mm.

La dernière nappe de sommet 44, dite de protection, a une largeur L₄₄ égale à 180 mm.

Les deux couches de travail 41 et 43 sont, de chaque côté du plan équatorial et axialement dans le prolongement de la couche d'éléments de renforcement circonférentiels 42, couplées sur une largeur axiale 1 égale à 8 mm. Les câbles de la première couche de travail 41 et les câbles de la deuxième couche de travail 43, sur la largeur axiale de couplage 1 des deux couches, sont séparés radialement entre eux par une couche de gomme, dont l'épaisseur est minimale et correspond au double de l'épaisseur de la couche caoutchouteuse de calandrage des câbles métalliques 11.35 non frettés dont est formée chaque couche de travail 41, 43, soit 0,8 mm. Sur la largeur restante commune aux deux couches de travail, les deux couches de travail 41, 43 sont séparés par un profilé de caoutchouc, non représenté sur la figure, l'épaisseur dudit profilé étant croissante en allant de l'extrémité axialement extérieure de la zone de couplage à l'extrémité de la couche de travail la moins large. Ledit profilé a avantageusement une largeur axiale suffisante pour recouvrir radialement l'extrémité de la couche de travail 41 la plus large, qui est, dans ce cas la couche de travail radialement la plus proche de l'armature de carcasse.

Conformément à l'invention, entre l'extrémité de la couche d'éléments de renforcement circonférentiels 42 et l'extrémité axialement intérieure de la zone de couplage de la largeur axiale 1 est mise en place une couche de mélange caoutchouteux 6 présentant une plasticité Mooney égale à 95 UM, supérieur aux plasticités Mooney des calandrages des couches de travail 41, 43 qui sont identiques et égaux à 90 UM. La couche de mélange caoutchouteux 6 présente une épaisseur supérieure à 1.5 mm sur une largeur D égale à 8 mm et une épaisseur maximum E égale à 2.4 mm.

Sur la figure 2, le pneumatique 21 diffère de celui représenté sur la figure 1 en ce qu'il comporte une couche d'éléments de renforcement complémentaire 245, dite de triangulation, de largeur sensiblement égale à celle de la couche de travail 243. Les éléments de renforcement de cette couche 245 forment un angle d'environ 60° avec la direction circonférentielle et sont orientés dans le même sens que les éléments de renforcement de la couche de travail 241. Cette couche 245 permet notamment de contribuer à la reprise des efforts de compression transversale dont est l'objet l'ensemble des éléments de renforcement dans la zone du sommet du pneumatique.

Des essais ont été réalisés avec des pneumatiques réalisés selon l'invention conformément à la représentation de la figure 1 ainsi qu'avec des pneumatiques dits de référence.

Ces pneumatiques de référence présentent une architecture de sommet semblable aux pneumatiques selon l'invention si ce n'est qu'ils ne comportent pas de couche de mélange caoutchouteux 6 mise en place entre l'extrémité de la couche d'éléments de renforcement circonférentiels et l'extrémité axialement intérieur de la zone de couplage des couches de sommet de travail adjacentes à la couche d'éléments de renforcement circonférentiels.

Des essais d'endurance en roulage ligne droite ont été réalisés sur une machine de tests imposant aux pneumatiques une charge de 3800 Kg et une vitesse de 110 km/h. Les essais ont été réalisés pour les pneumatiques selon l'invention avec des conditions identiques à celles appliquées aux pneumatiques de référence.

Les essais ainsi réalisés ont montré que les distances parcourues lors de chacun de ces tests sont sensiblement identiques pour les pneumatiques selon l'invention et les pneumatiques de référence. Il apparaît par contre que les résultats obtenus avec les pneumatiques selon l'invention présentent des variations inférieures à celles concernant les résultats des pneumatiques de référence. Avec les pneumatiques de référence, on observe une dispersion des distances parcourues de l'ordre de 10% alors que la dispersion observée avec les pneumatiques selon l'invention est de l'ordre de 5%.

## Revendications

1. Pneumatique (1) à armature de carcasse radiale comprenant une armature de sommet (4) formée d'au moins deux couches de sommet de travail (41, 43) d'éléments de renforcement inextensibles, croisés d'une couche à l'autre en faisant avec la direction circonférentielle des angles compris entre 10° et 45°, elle-même coiffée radialement d'une bande de roulement (5), ladite bande de roulement étant réunie à deux bourrelets par l'intermédiaire de deux flancs, l'armature de sommet (4) comportant au moins une couche d'éléments de renforcement circonférentiels (42) radialement disposée entre deux couches de sommet de travail (41, 43), d étant la distance axiale séparant l'extrémité de la couche d'éléments de renforcement circonférentiels (42) et l'extrémité de la couche de sommet de travail (43) la plus étroite adjacente à la couche d'éléments de renforcement circonférentiels (42), les couches de sommet de travail (41, 43) adjacentes à la couche d'éléments de renforcement circonférentiels (42) étant de part et d'autre du plan équatorial et dans le prolongement axial de la couche d'éléments de renforcement circonférentiels (42) couplées sur une largeur axiale (1), pour être ensuite découplées par des profilés de mélange de caoutchouc au moins sur le restant de la largeur commune aux dites deux couches de travail (41, 43), **caractérisé en ce qu'**une couche de mélange polymérique (6) d'épaisseur supérieure à 1.5 mm sur une largeur axiale supérieure à 0.1xd est positionnée axialement entre l'extrémité axialement extérieure de la couche d'éléments de renforcement circonférentiels (42) et l'extrémité axialement intérieure de la zone de couplage des couches de sommet de travail (41, 43) adjacentes à la couche d'éléments de renforcement circonférentiels (42).

2. Pneumatique (1) selon la revendication 1, **caractérisé en ce que** la couche de mélange polymérique (6) positionnée axialement entre l'extrémité axialement extérieure de la couche d'éléments de renforcement circonférentiels (42) et l'extrémité axialement intérieure de la zone de couplage des couches de sommet de travail (41, 43) adjacentes à la couche d'éléments de renforcement circonférentiels (42) présente une largeur axiale (D) inférieure à 0.5xd.

3. Pneumatique (1), selon l'une des revendications précédentes S étant la largeur maximale axiale du pneumatique (1), lorsque ce dernier est monté sur sa jante de service et gonflé à sa pression recommandée, **caractérisé en ce que** la couche d'éléments de renforcement circonférentiels (42) présente une largeur axiale supérieure à 0.4xS.

4. Pneumatique (1) selon l'une des revendications précédentes, au moins deux couches de sommet de travail (41, 43) présentant des largeurs axiales différentes, **caractérisé en ce que** la différence entre la largeur axiale de la couche de sommet de travail (41) axialement la plus large et la largeur axiale de la couche de sommet de travail (43) axialement la moins large est comprise entre 10 et 30 mm.

5. Pneumatique (1) selon la revendication 4, **caractérisé en ce que** la couche de sommet de travail (41) axialement la plus large est radialement à l'intérieur des autres couches de sommet de travail (43).

6. Pneumatique (1) selon l'une des revendications précédentes, **caractérisé en ce que** les éléments de renforcement d'au moins une couche d'éléments de renforcement circonférentiels (42) sont des éléments de renforcement métalliques présentant un module sécant à 0,7 % d'allongement compris entre 10 et 120 GPa et un module tangent maximum inférieur à 150 GPa.

7. Pneumatique (1) selon l'une des revendications précédentes, **caractérisé en ce que** l'angle formé avec la direction circonférentielle par les éléments de renforcement des couches de sommet de travail (41, 43) est inférieur à 30° et de préférence inférieur à 25°.

8. Pneumatique (1) selon l'une des revendications précédentes, **caractérisé en ce que** les couches de sommet de travail (41, 43) comportent des éléments de renforcement, croisés d'une nappe à l'autre, faisant avec la direction circonférentielle des angles variables selon la direction axiale.

9. Pneumatique (1) selon l'une des revendications précédentes, **caractérisé en ce que** l'armature de sommet (4) est complétée radialement à l'extérieur par au moins une nappe supplémentaire (44), dite de protection, d'éléments de renforcement dits élastiques, orientés par rapport à la direction circonférentielle avec un angle compris entre 10° et 45° et de même sens que l'angle formé par les éléments inextensibles de la nappe de travail (43) qui lui est radialement adjacente.

10. Pneumatique (1) selon l'une des revendications précédentes, **caractérisé en ce que** l'armature de sommet (4) comporte en outre une couche de triangulation formée d'éléments de renforcement métalliques faisant avec la direction circonférentielle des angles supérieurs à 60°.

11. Etape d'un procédé de fabrication d'un pneumatique (1) à armature de carcasse radiale comprenant une armature de sommet (4) formée d'au moins deux couches de sommet de travail (41, 43) d'éléments de renforcement inextensibles, croisés d'une couche à l'autre en faisant avec la direction circonférentielle des angles compris entre 10° et 45°, elle-même coiffée radialement d'une bande de roulement (5), ladite bande de roulement étant réunie à deux bourrelets par l'intermédiaire de deux flancs, l'armature de sommet (4) comportant au moins une couche d'éléments de renforcement circonférentiels (42) radialement disposée entre deux couches de sommet de travail (41, 43), d étant la distance axiale séparant l'extrémité de la couche d'éléments de renforcement circonférentiels (42) et l'extrémité de la couche de sommet de travail (43) la plus étroite adjacente à la couche d'éléments de renforcement circonférentiels (42), les couches de sommet de travail (41, 43) adjacentes à la couche d'éléments de renforcement circonférentiels (42) étant de part et d'autre du plan équatorial et dans le prolongement axial de la couche d'éléments de renforcement circonférentiels (42) couplées sur une largeur axiale (1), pour être ensuite découplées par des profilés de mélange de caoutchouc au moins sur le restant de la largeur commune aux dites deux couches de travail (41, 43), **caractérisée en ce qu'**une couche de mélange polymérique (6) d'épaisseur supérieure à 1.5 mm sur une largeur axiale supérieure à 0.1xd est mise en place axialement entre l'extrémité axialement extérieure de la couche d'éléments de renforcement circonférentiels (42) et l'extrémité axialement intérieure de la zone de couplage des couches de sommet de travail (41, 43) adjacentes à la couche d'éléments de renforcement circonférentiels (42) et **en ce que** la plasticité Mooney de la couche de mélange (6) non réticulé est supérieure à la plasticité Mooney du mélange de calandrage non réticulé des couches de sommet de travail (41, 43) adjacentes à la couche d'éléments de renforcement circonférentiels (42).

12. Etape d'un procédé de fabrication d'un pneumatique (1) selon la revendication 11, **caractérisée en ce que** la plasticité Mooney de la couche de mélange (6) non réticulé est supérieur à 90 UM et de préférence supérieur à 95 UM.

## Claims

1. Tyre (1) with a radial carcass reinforcement comprising a crown reinforcement (4) formed of at least two working crown layers (41, 43) of inextensible reinforcing elements, crossed from one layer to the other making angles of between 10° and 45° with the circumferential direction, itself radially capped by a tread (5), the said tread being connected to two beads via two sidewalls, the crown reinforcement (4) comprising at least one layer of circumferential reinforcing elements (42) positioned radially between two working crown layers (41, 43), d being the axial distance separating the end of the layer of circumferential reinforcing elements (42) and the end of the narrowest working crown layer (43) adjacent to the layer of circumferential reinforcing elements (42), the working crown layers (41, 43) adjacent to the layer of circumferential reinforcing elements (42) being on each side of the equatorial plane and in the axial continuation of the layer of circumferential reinforcing elements coupled over an axial width (1), in order thereafter to be decoupled by profiled elements of rubber compound at least over the remainder of the width common to the said two working layers (41, 43), **characterized in that** a layer of polymer blend (6) having a thickness greater than 1.5 mm over an axial width greater than 0.1×d is positioned axially between the axially exterior end of the layer of circumferential reinforcing elements (42) and the axially interior end of the coupling zone of the working crown layers (41, 43) adjacent to the layer of circumferential reinforcing elements (42).

2. Tyre (1) according to Claim 1, **characterized in that** the layer of polymer blend (6) positioned axially between the axially exterior end of the layer of circumferential reinforcing elements (42) and the axially interior end of the coupling zone of the working crown layers (41, 43) adjacent to the layer of circumferential reinforcing elements (42) has an axial width (D) of less than 0.5×d.

3. Tyre (1) according to either of the preceding claims, S being the maximum axial width of the tyre (1) when the latter is mounted on its service rim and inflated to its recommended pressure **characterized in that** the layer of circumferential reinforcing elements (42) has an axial width greater than 0.4×S.

4. Tyre (1) according to one of the preceding claims, at least two working crown layers (41, 43) having different axial widths, **characterized in that** the difference between the axial width of the axially widest working crown layer (41) and the axial width of the axially least wide working crown layer (43) is between 10 and 30 mm.

5. Tyre (1) according to Claim 4, **characterized in that** the axially widest working crown layer (41) is radially on the inside of the other working crown layers (43).

6. Tyre (1) according to one of the preceding claims, **characterized in that** the reinforcing elements of at least one layer of circumferential reinforcing elements (42) are metal reinforcing elements with a secant modulus at 0.7% elongation between 10 and 120 GPa and a maximum tangent modulus of less than 150 GPa.

7. Tyre (1) according to one of the preceding claims, **characterized in that** the angle formed with the circumferential direction by the reinforcing elements of the working crown layers (41, 43) is less than 30° and preferably less than 25°.

8. Tyre (1) according to one of the preceding claims, **characterized in that** the working crown layers (41, 43) comprise reinforcing elements that are crossed from one ply to the other, making with the circumferential direction angles that vary according to the axial direction.

9. Tyre (1) according to one of the preceding claims, **characterized in that** the crown reinforcement (4) is supplemented radially on the outside by at least one additional ply (44), known as a protective ply, of so-called elastic reinforcing elements, oriented with respect to the circumferential direction at an angle between 10° and 45° and of the same direction as the angle formed by the inextensible elements of the working ply (43) radially adjacent to it.

10. Tyre (1) according to one of the preceding claims, **characterized in that** the crown reinforcement (4) further comprises a triangulation layer formed of metal reinforcing elements that make angles greater than 60° with the circumferential direction.

11. Step of a process for manufacturing a tyre (1) with a radial carcass reinforcement comprising a crown reinforcement (4) formed of at least two working crown layers (41, 43) of inextensible reinforcing elements, crossed from one layer to the other making angles of between 10° and 45° with the circumferential direction, itself radially capped by a tread (5), the said tread being connected to two beads via two sidewalls, the crown reinforcement (4) comprising at least one layer of circumferential reinforcing elements (42) positioned radially between two working crown layers (41, 43), d being the axial distance separating the end of the layer of circumferential reinforcing elements (42) and the end of the narrowest working crown layer (43) adjacent to the layer of circumferential reinforcing elements (42),the working crown layers (41, 43) adjacent to the layer of circumferential reinforcing elements (42) being on each side of the equatorial plane and in the axial continuation of the layer of circumferential reinforcing elements (42) coupled over an axial width (1), in order thereafter to be decoupled by profiled elements of rubber compound at least over the remainder of the width common to the said two working layers (41, 43), **characterized in that** a layer of polymer blend (6) having a thickness greater than 1.5 mm over an axial width greater than 0.1×d is positioned axially between the axially exterior end of the layer of circumferential reinforcing elements (42) and the axially interior end of the coupling zone of the working crown layers (41, 43) adjacent to the layer of circumferential reinforcing elements (42) and **in that** the Mooney plasticity of the layer of uncrosslinked blend (6) is greater than the Mooney plasticity of the uncrosslinked calendering blend of the working crown layers (41, 43) adjacent to the layer of circumferential reinforcing elements (42).

12. Step of a process for manufacturing a tyre (1) according to Claim 11, **characterized in that** the Mooney plasticity of the layer of uncrosslinked blend (6) is greater than 90 MU and preferably greater than 95 MU.

## Patentansprüche

1. Luftreifen (1) mit radialer Unterbaubewehrung, umfassend eine Scheitelbewehrung (4), die von mindestens zwei Arbeitsscheitelschichten (41, 43) von nicht dehnbaren Verstärkungselementen gebildet wird, die von einer Schicht zur anderen gekreuzt sind, wobei sie mit der Umfangsrichtung Winkel zwischen 10° und 45° bilden, die selbst radial von einem Laufband (5) bedeckt ist, wobei das Laufband mit zwei Wülsten mit Hilfe von zwei Seitenflächen verbunden ist, wobei die Scheitelbewehrung (4) mindestens eine Schicht von Umfangsverstärkungselementen (42) umfasst, die radial zwischen zwei Arbeitsscheitelschichten (41, 43) angeordnet ist, wobei d der Axialabstand zwischen dem Ende der Schicht von Umfangsverstärkungselementen (42) und dem Ende der schmalsten Arbeitsscheitelschicht (43) ist, die an die Schicht von Umfangsverstärkungselementen (42) angrenzt, wobei die Arbeitsscheitelschichten (41, 43), die an die Schicht von Umfangsverstärkungselementen (42) angrenzen, beiderseits der Mittelebene und in der axialen Verlängerung der Schicht von Umfangsverstärkungselementen (42) auf einer axialen Breite (1) gekoppelt sind, um dann durch Profile aus einem Kautschukgemisch mindestens auf der übrigen gemeinsamen Länge der beiden Arbeitsschichten (41, 43) entkoppelt zu sein, **dadurch gekennzeichnet, dass** eine Schicht aus Polymergemisch (6) mit einer Dicke über 1,5 mm auf einer axialen Breite über 0,1 xd axial zwischen dem axial äußeren Ende der Schicht von Umfangsverstärkungselementen (42) und dem axial inneren Ende der Kupplungszone der Arbeitsscheitelschichten (41, 43), die an die Schicht von Umfangsverstärkungselementen (42) angrenzen, angeordnet ist.

2. Luftreifen (1) nach Anspruch 1, **dadurch gekennzeichnet, dass** die Schicht aus Polymergemisch (6), die axial zwischen dem axial äußeren Ende der Schicht von Umfangsverstärkungselementen (42) und dem axial inneren Ende der Kupplungszone der Arbeitsscheitelschichten (41, 43), die an die Schicht von Umfangsverstärkungselementen (42) angrenzt, positioniert ist, eine axiale Breite (D) unter 0,5 xd aufweist.

3. Luftreifen (1) nach einem der vorhergehenden Ansprüche, wobei S die maximale axiale Breite des Luftreifens (1) ist, wenn dieser auf seiner Betriebsfelge montiert und auf seinen empfohlenen Druck aufgepumpt ist, **dadurch gekennzeichnet, dass** die Schicht von Umfangsverstärkungselementen (42) eine axiale Breite über 0,4 xS aufweist.

4. Luftreifen (1) nach einem der vorhergehenden Ansprüche, wobei mindestens zwei Arbeitsscheitelschichten (41, 43) unterschiedliche axiale Breiten aufweisen, **dadurch gekennzeichnet, dass** der Unterschied zwischen der axial größten axialen Breite der Arbeitsscheitelschicht (41) und der axial kleinsten axialen Breite der Arbeitsscheitelschicht (43) zwischen 10 und 30 mm beträgt.

5. Luftreifen (1) nach Anspruch 4, **dadurch gekennzeichnet, dass** sich die axial breiteste Arbeitsscheitelschicht (41) radial im Inneren der anderen Arbeitsscheitelschichten (43) befindet.

6. Luftreifen (1) nach einem der vorhergehenden Ansprüche, **dadurch gekennzeichnet, dass** die Verstärkungselemente mindestens einer Schicht von Umfangsverstärkungselementen (42) metallische Verstärkungselemente sind, die ein Sekantenmodul bei 0,7% Dehnung zwischen 10 und 120 GPa und ein maximales Tangentenmodul unter 150 GPa aufweisen.

7. Luftreifen (1) nach einem der vorhergehenden Ansprüche, **dadurch gekennzeichnet, dass** der Winkel, den die Verstärkungselemente der Arbeitsscheitelschichten (41, 43) mit der Umfangsrichtung bilden, kleiner als 30° und vorzugsweise kleiner als 25° ist.

8. Luftreifen (1) nach einem der vorhergehenden Ansprüche, **dadurch gekennzeichnet, dass** die Arbeitsscheitelschichten (41, 43) Verstärkungselemente umfassen, die von einer Lage zur nächsten gekreuzt sind und mit der Umfangsrichtung variable Winkel in Axialrichtung bilden.

9. Luftreifen (1) nach einem der vorhergehenden Ansprüche, **dadurch gekennzeichnet, dass** die Scheitelbewehrung (4) radial außen durch mindestens eine zusätzliche, so genannte Schutzschicht (44) von so genannten elastischen Verstärkungselementen ergänzt ist, die in Bezug zur Umfangsrichtung mit einem Winkel zwischen 10° und 45° ausgerichtet sind, in dieselbe Richtung, wie der von den nicht dehnbaren Elementen der an sie radial angrenzenden Arbeitslage (43) gebildete Winkel.

10. Luftreifen (1) nach einem der vorhergehenden Ansprüche, **dadurch gekennzeichnet, dass** die Scheitelbewehrung (4) ferner eine Triangulationsschicht umfasst, die von metallischen Verstärkungselementen gebildet wird, die mit der Umfangsrichtung Winkel über 60° bilden.

11. Schritt eines Verfahrens zur Herstellung eines Luftreifens (1) mit radialer Unterbaubewehrung, umfassend eine Scheitelbewehrung (4), die von mindestens zwei Arbeitsscheitelschichten (41, 43) von nicht dehnbaren Verstärkungselementen gebildet wird, die von einer Schicht zur anderen gekreuzt sind, wobei sie mit der Umfangsrichtung Winkel zwischen 10° und 45° bilden, die selbst radial von einem Laufband (5) bedeckt ist, wobei das Laufband mit zwei Wülsten über zwei Seitenflächen verbunden ist, wobei die Scheitelbewehrung (4) mindestens eine Schicht von Umfangsverstärkungselementen (42) umfasst, die radial zwischen zwei Arbeitsscheitelschichten (41, 43) angeordnet ist, wobei d der Axialabstand zwischen dem Ende der Schicht von Umfangsverstärkungselementen (42) und dem Ende der schmalsten Arbeitsscheitelschicht (43) ist, die an die Schicht von Umfangsverstärkungselementen (42) angrenzt, wobei die Arbeitsscheitelschichten (41, 43), die an die Schicht von Umfangsverstärkungselementen (42) angrenzt, beiderseits der Mittelebene und in der axialen Verlängerung der Schicht von Umfangsverstärkungselementen (42) ist, die auf einer axialen Breite (1) gekoppelt sind, um dann durch Profile aus Kautschukgemisch zumindest auf der übrigen gemeinsamen Breite der beiden Arbeitsschichten (41, 43) entkoppelt zu werden, **dadurch gekennzeichnet, dass** eine Schicht aus Polymergemisch (6) mit einer Dicke über 1,5 mm auf einer axialen Breite über 0,1 xd axial zwischen dem axial äußeren Ende der Schicht von Umfangsverstärkungselementen (42) und dem axial inneren Ende der Kupplungszone der Arbeitsscheitelschichten (41, 43), die an die Schicht von Umfangsverstärkungselementen (42) angrenzen, angeordnet ist, und dass die Mooney-Plastizität der Schicht aus nicht vernetztem Gemisch (6) größer als die Mooney-Plastizität des nicht vernetzten Kalandriergemisches der Arbeitsscheitelschichten (41, 43) ist, die an die Schicht von Umfangsverstärkungselementen (42) angrenzen.

12. Schritt eines Verfahrens zur Herstellung eines Luftreifens (1) nach Anspruch 11, **dadurch gekennzeichnet, dass** die Mooney-Plastizität der Schicht aus nicht vernetztem Gemisch (6) größer als 90 UM und vorzugsweise größer als 95 UM ist.
